# EUROPÄISCHE PATENTSCHRIFT

(11) **EP 0 482 407 B1**
(45) Veröffentlichungstag und Bekanntmachung des Hinweises auf die Patenterteilung: **17.05.1995**
(21) Anmeldenummer: 91117009.0
(22) Anmeldetag: 05.10.1991
(51) Int. Cl.: A23K 1/00, C05F 1/00, C05F 3/00

(54) **Verfahren zur Herstellung von tierischen und/oder pflanzlichen Nährstoffen aus organischem Abfall**
Process for the production of an animal and/or vegetable nutritive substance from organic waste
Procédé de production d'une substance nutritive animale et/ou végétale à partir de déchet organique

(30) Priorität: 23.10.1990 CH 3390/90
(43) Veröffentlichungstag der Anmeldung: 29.04.1992
(73) Patentinhaber: ORGAVER AG, 3011 Bern (CH)
(72) Erfinder: Hunziker, Erwin, sen., CH-9542 Münchwilen (CH)
(74) Vertreter: Révy von Belvárd, Peter

(56) Entgegenhaltungen:
- EP-A- 0 429 744
- CA-A- 1 108 920
- CH-A- 387 671
- US-A- 4 203 376
- US-A- 4 246 018
- US-A- 4 411 682
- WORLD PATENTS INDEX LATEST Section Ch, Week 8250, Derwent Publications Ltd., London, GB; Class C, AN 82-07763J
- WORLD PATENTS INDEX Section Ch, Week 7843, Derwent Publications Ltd., London, GB; Class C, AN 78-77293A

## Beschreibung

Die Erfindung betrifft ein Verfahren zur Herstellung pasteurisierten tierischen und/oder pflanzlichen Nährstoffes aus organischem Siedlung-, Industrie- und Landwirtschaftsabfall durch dessen aerobe biologische Verrottung, bei der der Abfall während einer Verweilzeit in einem Behälter unter ständiger Umrührung innig mit Luft vermischt, und somit einer bakteriellen Zersetzung zugeführt wird.

Bei einem bekannten Verfahren vorliegender Art werden (EP-A-429744) nach dem Befüllen eines Aufnahmebehälters mit einem Gemisch aus miteinander vermengt zu verottenden, organischen Haushalts- und/-oder Landwirtschaftsabfällen fester Konstistenz bis zur Hälfte seines Fassungsvermögens dem Abfallgemisch flüssige Substanzen wie Jauche und/oder entfettete Kadaversuppe unter gleichzeitiger natürlicher Luftzufuhr durch dauerndes Umrühren des Abfallgemisches zugeführt. Die Umrührung wird während einer ersten Verweilzeit des Abfallgemisches im Aufnahmebehälter von 2 bis 3 Stunden fortgeführt. Anschliessend erfolgt eine Zudosierung dekantierten Klärschlammes mit einer derjenigen des teilweise bereits vergorenen Abfallgemisches entsprechenden Temperatur und höchstens mit einem Gewicht, das ein Drittel desjenigen des Abfallgemisches nicht übersteigt, unter gleichzeitiger Beigabe von Weisskalk je nach ph-Wert des letzteren im Umfange von ungefähr 4% des Klärschlammgewichtes. Die während besagter Zudosierung ununterbrochen getätigte Umrührung des gesamten Abfallgemisches wird sodann noch für die Dauer einer weiteren Verweilzeit von 69 bis 70 Stunden aufrechterhalten.

Die bekannte Fermentiermethode gestattet zwar eine mechanisiert durchführbare, steuerbare, biologische Umwandlung organischer Abfälle einschliesslich Klärschlamm, Tierkadaver, Jauche usw. mit Entkeimung derselben ohne Zuhilfenahme von Fremdwärme. Hierbei erfolgt jedoch der biologische Umbau des Abfallmaterials aufgrund des bekannten Sporenwachstums in einem zeitlich linear verlaufenden, langsamen Rotteprozess mit einer Prozessdauer von mindestens 75 bis 80 Stunden. Das hieraus resultierende Substrat ist grobkörnig, so dass für die meisten Verwendungen eine Zerkleinerung desselben erforderlich ist.

Das Verfahren gemäss der JP-A-57179091 sieht vor, dass zur Aktivierung der Verrottung von organischem Material, diesem Bakterien zugegeben werden.

Die US-A-4 411 682 sieht zum Anregen des bakteriellen Abbaus eine aktive Luftzirkulation über und durch das verrottende Material vor.

Die vorliegende Erfindung verfolgt daher das Ziel, ein Verfahren eingangs beschriebener Art anzugeben, das die besagten Nachteile der bekannten Fermentiermethode meidet und eine Verkürzung der Zeitdauer des Rotteprozesses sowie eine qualitative Verbesserung des entstehenden Produktes ermöglicht.

Diese Aufgabe wird erfindungsgemäss mit Hilfe der nachfolgend angeführten Behandlungsschritte gelöst.
a) Vermengen dekantierten Klärschlammes, der einen Mindestgehalt an Trockensubstanz TS von 22% aufweist, mit den Rotteprozess fördernden Zusätzen durch dauerndes Umrühren des entstandenen Gemisches, bis darin eine Prozesstemperatur zwischen 20 und 30½C auftritt, wobei ein Kohlenstoff spendender Zusatz mit einem Gewichtsanteil von 20 bis 30%, ein Kohlenhydrat spendender Zusatz mit einem Gewichtsanteil von 4 bis 8 Promille und ein katalysierender Zusatz mit einem Gewichtsanteil von 1 bis 3 Promille zudosiert werden, sodann
b) Zuführen organischer Siedlungs-, Industrie- und/oder Landwirtschaftsabfalls im Umfange von bis zu 200% des Klärschlammgewichtes unter ununterbrochener Umrührung des Abfallgemisches bis zum Erreichen einer Prozesstemperatur von 45 bis 55°C, wobei der Feuchtigkeitsgehalt des Abfallgemisches durch Zugabe befeuchtender oder trocknender Zusätze auf 30 bis 40% Trockensubstanz TS eingestellt wird, und anschliessend
c) Impfung des Abfallgemisches zusätzlich mit 21 Leuchtpetroleum je 1000 kg Abfallgewicht sowie mit einem Eiweiss- und einem Kohlenstoffspender, welche letzteren vorgängig auf die gleiche Prozesstemperatur erwärmt worden sind, gesamthaft ein Gewicht von ca. 10% desjenigen des Abfallgemisches und dabei ein Mischverhältnis 1 : 2 aufweisen, und fortgesetztes Umrühren des Abfallgemisches im Aussetzbetrieb mit einer Taktzeitdauer TR von 10 bis 20 Minuten für den Rührvorgang sowie einer jeweiligen Stillstandszeit von TS von 20 bis 30 Minuten dazwischen bis eine Prozesstemperatur von 68 bis maximal 80°C erreicht ist.

Durch ein derartiges Vorgehen, insbesondere mittels der den Rotteprozess fördenden Zusätzen und der Impfung mit Leuchtpetroleum sowie Eiweiss- und Kohlenstoffspender lässt sich der biologische Umbau des Abfallgemisches erheblich intensivieren und beschleunigen, indem in demselben eine zeitlich exponentiell zunehmende Zellteilung ausgelöst wird. Neben einem im Vergleich zur bekannten Methode schnelleren Ablauf des Umbauprozesses, wird auch eine gegenüber derjenigen bei dieser bekannten Methode höhere Prozesstemperatur von über 80°C erreichbar und zugleich ein feinkörniger, veredelter, pflanzlicher oder tierischer Nährstoff herstellbar.

Zum Herbeiführen einer Prozesstemperatur von 20 bis 30°C im Anschluss an die Zuführung der den Verrottevorgang intensivierenden Zusätze ist eine ununterbrochene Umrührung des entstandenen Gemisches während einer ersten Verweilzeit von 6 Stunden erforderlich. Nach Zudosierung der organischen Abfälle wird das Abfallgemisch durch dessen fortgesetzte Umrührung während einer zweiten Verweilzeit von 24 Stunden auf die Prozesstemperatur von 45 bis 55°C gebracht. Die Umrührung erfolgt hiermit mittels Mischschnecken, so dass das Abfallgemisch zugleich einer Knetbehandlung unterzogen wird. Schliesslich beträgt eine dritte Verweilzeit, während deren anschliessend an die Impfung mit dem Leuchtpetroleum, dem Eiweiss- und dem Kohlenstoffspender die Umrührung im Aussetzbetrieb weitergeführt wird, 6 bis 8 Stunden. Das Leuchtpetroleum ruft durch direkte Speisung der sog. Mesophil-Bakterien im Abfallgemisch eine beschleunigte Zunahme der Prozesstemperatur hervor.

Massnahmen einer besonders vorteilhaften, weiteren Ausgestaltung des Verfahrens gemäss der Erfindung sind den abhängigen Patentansprüchen 2 bis 7 entnehmbar. So füllt man zweckmässig zu Beginn des Prozesses in den hierfür vorgesehenen Behälter eine Menge dekantierten Klärschlammes mit dem Gewicht von 1000 kg ein. Für einen optimalen Verfahrensablauf empfiehlt es sich dann, hierzu die den Umbauprozess fördernden folgenden Zusätze zuzudosieren:
250 kg Holzstaubpellets als Kohlenstoffspender
6 kg Melasse als Kohlehydratspender und
1,5 kg Hefe als Katalysator.

Zur Einstellung des Feuchtigkeitsgehaltes im Abfallgemisch eignen sich besonders Gülle und/oder Kadaversuppe und/oder der Flotationsabfall von Molkereien, Käsereien und/oder Metzgereien als befeuchtende Zusätze, während Papier und/oder Holzstaubpellets mit Vorteil als trocknende Zusätze zur Verwendung gelangen können. Es können bei der Impfung des Abfallgemisches ferner zweckmässig vorangehend pasteurisierte Kadaversuppe als Eiweissspender und Holzstaubpellets als Kohlenstoffspender eingesetzt werden. Es soll jeweils eine zuvor entfettete Kadaversuppe beigegeben werden.

Die genaue Dauer der obengenannten dritten Verweilzeit von 6 bis 8 Stunden, während deren das geimpfte Abfallgemisch einer intermittierenden Umrührung unterzogen wird, bemisst sich je nach dem Temperaturverlauf in demselben. Sie ist beim Erreichen einer Prozesstemperatur von 80°C unbedingt abzubrechen, da bei darüberhinausgehenden Temperaturen eine Verminderung des Nährstoffgehaltes des fermentierten Produktes stattfindet. Bei Temperaturen über 100°C besteht zudem die Gefahr der Selbstentzündung.

Nach dem Rotteprozess ist das Produkt pasteurisiert und weist einen Feuchtigkeitsgehalt von 40 bis 60% auf. Wegen seines hohen Gehaltes an Nährstoffen eignet es sich vorzüglich sowohl als Tierfutter als auch als Pflanzennahrung.

Zur Stabilisierung seines Nährstoffgehaltes kann das aus dem Umbauprozess hervorgegangene Substrat weiters sehr vorteilhaft durch Luftentfeuchtung mittels seiner Eigenwärme bei gleichzeitiger Umrührung desselben mit 6 bis 8 Umdrehungen pro Minute während einer Zeitdauer von etwa 12 bis 18 Stunden auf einen Endfeuchtigkeitsgehalt von 90% Trockensubstanz TS gebracht werden.

Eine noch weitere Verwendungsmöglichkeit des Substrates bietet sich in Form einer nährstoffreichen Topfpflanzerde an, wenn es mit 20% Erde oder 10% Ton vermischt wird.

## Patentansprüche

1. Verfahren zur Herstellung pasteurisierten tierischen und/oder pflanzlichen Nährstoffes aus organischen Siedlungs-, Industrie- und Landwirtschaftsabfall durch dessen aerobe biologische Verrottung, bei der der Abfall während einer Verweilzeit in einem Behälter unter ständiger Umrührung innig mit Luft vermischt und somit einer bakteriellen Zersetzung zugeführt wird, gemäss folgender Behandlungsschritte:
a) Vermengen dekantierten Klärschlammes, der einen Mindestgehalt an Trockensubstanz TS von 22% aufweist, mit den Rotteprozess fördernden Zusätzen durch dauerndes Umrühren des entstandenen Gemisches, bis darin eine Prozesstemperatur zwischen 20 und 30°C auftritt, wobei ein Kohlenstoff spendender Zusatz mit einem Gewichtsanteil von 20 bis 30%, ein Kohlenhydrat spendender Zusatz mit einem Gewichtsanteil von 4 bis 8 Promille und ein katalysierender Zusatz mit einem Gewichtsanteil von 1 bis 3 Promille zudosiert werden, sodann
b) Zuführen organischer Siedlungs-, Industrie- und/oder Landwirtschaftsabfall im Umfange von bis zu 200% des Klärschlammgewichtes unter ununterbrochener Umrührung des Abfallgemisches bis zum Erreichen einer Prozesstemperatur von 45 bis 55°C, wobei der Feuchtigkeitsgehalt des Abfallgemisches durch Zugabe befeuchtender oder trockener Zusätze auf 30 bis 40% Trockensubstanz TS eingestellt wird, und anschliessend
c) Impfung des Abfallgemisches zusätzlich mit 2 l Leuchtpetroleum je 1000 kg Abfallgewicht sowie mit einem Eiweiss- und einem Kohlenstoffspender, welche letzteren vorgängig auf die gleiche Prozesstemperatur erwärmt worden sind, gesamthaft ein Gewicht von ca. 10% desjenigen des Abfallgemisches und dabei ein Mischverhältnis 1 2 aufweisen, und fortgesetztes Umrühren des Abfallgemisches im Aussetzbetrieb mit einer Taktzeitdauer tR von 10 bis 20 Minuten für den Rührvorgang sowie einer jeweiligen Stillstandszeit tS von 20 bis 30 Minuten dazwischen bis eine Prozesstemperatur von 68 bis maximal 80°C erreicht ist.

2. Verfahren nach Patentanspruch 1, dadurch gekennzeichnet, dass der eingefüllte, dekantierte Klärschlamm ein Gewicht von 1000 kg aufweist, und dass 250 kg Holzstaubpellets als der Kohlenstoffspender, 6 kg Melasse als der Kohlehydratspender, sowie 1,5 kg Hefe als der Katalysator beigegeben werden.

3. Verfahren nach Patentanspruch 2, dadurch gekennzeichnet, dass zur Einstellung des Feuchtigkeitsgehaltes im Abfallgemisch Gülle und/oder Kadaversuppe und/oder Flotationsabfall von Käsereien, Molkereien, Metzgereien, als die befeuchtenden Zusätze und Papier und/oder Holzstaubpellets als die trockenen Zusätze zur Verwendung gelangen.

4. Verfahren nach Patentanspruch 3, dadurch gekennzeichnet, dass bei Impfung des Abfallgemisches vorangehend pasteuerisierte Kadaversuppe als Eiweisspender und Holzstaubpellets als Kohlenstoffspender eingesetzt werden.

5. Verfahren nach Patentanspruch 4, dadurch gekennzeichnet, dass dem Abfallgemisch jeweils entfettete Kadaversuppe zugegeben wird.

6. Verfahren nach Patentanspruch 5, dadurch gekennzeichnet, dass das gewonnene Substrat durch Entfeuchtung mittels Luft und dessen Eigenwärme und bei gleichzeitiger Umrührung desselben mit 6 bis 8 Umdrehungen pro Minute auf einen Endfeuchtigkeitsgehalt von 90% Trockensubstanz TS gebracht wird.

7. Verfahren nach Patentanspruch 5, dadurch gekennzeichnet, dass das aus dem Rotteprozess hervorgegangene Substrat mit Erde oder Ton vermischt wird, wobei das Mischverhältnis Substrat zu Erde ca. 5 : 1 und dasjenige Substrat zu Ton ca. 9 : 1 beträgt.

## Claims

1. A method for producing a pasteurized animal or vegetable nutrient from organic municipal, industrial and agricultural refuse by aerobic biologic decomposition thereof, wherein the refuse is thoroughly mixed by continuously stirring with air during a period of dwell in a container and, thus leading to a bacterial decomposition in accordance with the following treatment steps:
a) Blending decanted sludge, having a minimum content of 22% of dry substance TS, with decomposition-promoting additives by continuously stirring the resulting mixture until a process temperature of between 20 and 30°C is reached therein, wherein a carbon donative additive in a proportion of 20 to 30% by weight, a carbon hydrate donative in a proportion of 4 to 8 promille by weight and a catalytic additive in a proportion of 1 to 3 promille by weight are metered thereto, then
b) supplying organic municipal, industrial and/or agricultural refuse in a quantity up to 200% of the weight of the sludge continuoulsy stirring the mixture of refuse until a process temperature of 45 to 55°C is reached, the moisture content of the mixture of refuse being adjusted to 30 to 40% of dry substance TS by adding moistening or dry additives, and subsequently
c) inoculating the mixture of refuse with 2 L lamp oil for every 1000 kgms of the weight of the refuse as well as with an albumen donor and a carbon donor, the latters having been previously heated to the same process temperatur and having a weight of about 10% of that of the mixture of refuse in total and a mixing ratio of 1 : 2, and continuously stirring the mixture of refuse in an intermittend operation comprising a cadence period tR of 10 to 20 minutes for the stirring operation and a period of stoppage tS of 20 to 30 minutes each inbetween, until a process temperature of 68 to 80°C in maximum is reached.

2. Method according to claim 1, characterized in that the charged decanted sludge has a weight of 1000 kg, and that 250 kg of wood dust pellets are added as a carbon donor, 6 kg of molasses as the carbon hydrate donor, and 1,5 kg are added as the catalyst.

3. Method according to claim 2, characterized in that liquid manure and/or carcass soup and/or flotation waste from cheese factories, dairies or from butchers are used as the moistening additives for adjusting the moisture content of the mixture of refuse, and paper and/or wood dust pellets as the dry additives.

4. Method according to claim 3, characterized in that upon inoculating the mixture of refuse, previously pasteurized carcass soup as an albumen donor and wood dust pellets as a carbon donor are used.

5. Method according to claim 4, characterized in that degreased carcass soup is added to the respective mixture of refuse.

6. Method according to claim 5, characterized in that the recovered substrate is brought to a final moisture content of 90% dry substance TS by dehydration by means of air and its specific heat and by simultaneously stirring the same at 6 to 8 rpm.

7. Method according to claim 5, characterized in that the substrate resulting from the decomposition procedure is mixed with soil or clay, the mixing ratio of the substrate to the soil being about 5 : 1 and that of the substrate to the clay being about 9 : 1.

## Revendications

1. Procédé de fabrication de produits nutritifs animaux et/ou végétaux, pasteurisés, à partir de déchets venant des agglomérations/collectivités, de l'industrie et de l'agriculture, par pourrissement biologique aérobie de ceux-ci, lors duquel les déchets sont mélangés intimement à de l'air, pendant la durée d'un temps de séjour, dans un récipient, avec agitation de circulation permanente, et sont ainsi amenés à une décomposition bactérienne, suivant les étapes de traitement ci-après :
a) homogénéisation-mélange de boue de clarification décantée, présentant une teneur minimale en substance sèche TS de 22 %_{,} avec des additifs favorisant le processus de décomposition, par agitation permanente du mélange produit jusqu'à atteindre une température de processus entre 20 et 30 °c, un additif fournisseur de carbone, avec une proportion en poids de 20 à 30 %_{,} un additif fournisseur d'hydrate de carbone avec une proportion en poids de 4 à 8 pour mille et un additif catalyseur avec une proportion en poids de 1 à 3 pour mille étant ajouté de façon dosé, puis
b) amenée de déchets organiques issus des collectivités, de l'industrie et/ou de l'agriculture, en des quantités allant jusqu'à 200 % du poids des boues de clarification, avec agitation ininterrompue du mélange de déchets jusqu'à atteinte d'une température de processus de 45 à 55 °C, la teneur en humidité du mélange de déchets étant réglée, par appoint d'additifs humidificateurs ou sécheurs, pour atteindre 30 à 45 % de substance sèche TS, puis
c) inoculation du mélange de déchets, à titre supplémentaire, avec 2 l de pétrole lampant pour 1000 kg de déchets, avec un fournisseur d'albumine et un fournis seur de carbone, ces derniers étant préalablement chauffés à la même température de processus, en ayant ensemble un poids d'à peu près 10 % de celui du mélange de déchets et un rapport de mélange de 1 : 2 et continuation de l'agitation du mélange de déchets, pour obtenir un fonctionnement donnant une exposition sur une durée de cadencement tR de 10 à 20 minutes pour le processus d'agitation, ainsi qu'un temps de repos tS de 20 à 30 minutes entre-temps, jusqu'à atteindre une température de processus de 68 °c à un maximum de 80 °C.

2. Procédé selon la revendication 1, caractérisé en ce que la boue de clarification décantée introduite a un poids de 1000 kg et en ce que l'on ajoute 250 g de boulettes de poussière de bois à titre de fournisseur de carbone, 6 kg de mélasse à titre de fournisseur d'hydrate de carbone, ainsi que 1,5 g de levure à titre de catalyseur.

3. Procédé selon la revendication 2, caractérisé en ce que, pour régler la teneur en humidité dans le mélange de déchets, on utilise du purin et/ou un jus de cadavre et/ou un déchet de flottation issu de fromagerie, de laiterie, de boucherie-charcuterie à titre d'additif humidificateur, et de papier et/ou de boulettes de poussière de bois à titre d'additif sécheur.

4. Procédé selon la revendication 3, caractérisé en ce que, lors de l'inoculation du mélange de déchets, on utilise le jus de cadavre ayant au préalable été pasteurisé comme fournisseur d'albumine et les boulettes de poussière de bois comme fournisseur de carbone.

5. Procédé selon la revendication 6, caractérisé en ce que l'on ajoute chaque fois du jus de cadavre dégraissé au mélange de déchets.

6. Procédé selon la revendication 5, caractérisé en ce que le substrat obtenu est amené à une teneur d'humidité finale de 90 % en substance sèche TS par déshumidification au moyen d'air et de sa chaleur propre et avec agitation simultanée de celui-ci en procédant à 6 à 8 circulations par minute.

7. Procédé selon la revendication 5, caractérisé en ce que l'on mélange le substrat venant du processus de pourrissement avec de la terre ou de l'argile, le rapport de mélange substrat-terre étant d'à peu près 5 : 1 et le rapport substrat-argile étant d'à peu près 9 : 1.
